# EUROPÄISCHE PATENTANMELDUNG

(11) **EP 4 361 407 A1**
(43) Veröffentlichungstag der Anmeldung: **01.05.2024**
(21) Anmeldenummer: 23189639.0
(22) Anmeldetag: 04.08.2023
(51) Int. Cl.: F01D 11/22, F01D 17/16

(54) **TURBOMASCHINE MIT VERSTELLBAREN LEITELEMENTEN UND VERFAHREN ZUM BETRIEB DER TURBOMASCHINE**

(30) Priorität: 28.10.2022 DE 102022128618
(71) Anmelder: ATLAS COPCO ENERGAS GMBH, 50999 Köln (DE)
(72) Erfinder: Wiebe, Frank, 41542 Dormagen-Gohr (DE)
(74) Vertreter: Andrejewski - Honke Patent- und Rechtsanwälte Partnerschaft mbB

(57) **Zusammenfassung**

Die Erfindung betrifft eine Turbomaschine (1) mit einem Gehäuse (2), welches eine einen Hochdruckbereich (3a) und einen Niederdruckbereich (3b) aufweisende Laufradkammer (3) umfasst. Die Turbomaschine (1) umfasst ferner ein an dem Gehäuse (2) um eine in einer Axialrichtung (x) verlaufende Drehachse (4) drehbar gelagerten Rotor (5), welcher zumindest ein in der Laufradkammer (3) angeordnetes Turbolaufrad (6) aufweist. In dem Hochdruckbereich (3a) ist ein Leitapparat (8) mit einem ersten Klemmring (8a), einem zweiten Klemmring (8b) und in der Axialrichtung (x) zwischen dem ersten Klemmring (8a) und dem zweiten Klemmring (8b) positionierten verstellbaren Leitelementen (8c) angeordnet. Erfindungsgemäß ist eine variable Spannvorrichtung (9) vorgesehen, welche dazu eingerichtet ist in einer ersten Funktionsstellung den ersten Klemmring (8a) und zweiten Klemmring (8b) in der Axialrichtung (x) gegeneinander zu verspannen und in einer zweiten Funktionsstellung den ersten Klemmring (8a) und den zweiten Klemmring (8b) in der Axialrichtung (x) zu entlasten.

## Beschreibung

Die Erfindung betrifft eine Turbomaschine mit einem Gehäuse, welches eine einen Hochdruckbereich und einen Niederdruckbereich aufweisende Laufradkammer umfasst und mit einem an dem Gehäuse um eine in einer Axialrichtung verlaufende Drehachse drehbar gelagerten Rotor, welcher zumindest ein in der Laufradkammer angeordnetes Turbolaufrad aufweist. In dem Hochdruckbereich ist ein Leitapparat mit einem ersten Klemmring, mit einem zweiten Klemmring und mit in der Axialrichtung zwischen dem ersten Klemmring und dem zweiten Klemmring positionierten verstellbaren Leitelementen angeordnet. Die Erfindung betrifft ferner ein Verfahren zum Betrieb einer solchen Turbomaschine.

Die Turbomaschine ist dazu eingerichtet, dass im Betrieb ein Prozessfluid oder Prozessmedium entweder von dem Hochdruckbereich durch das Turbolaufrad in Richtung des Niederdruckbereichs geführt wird (Turbine bzw. Turboexpander) oder von dem Niederdruckbereich durch das Turbolaufrad in Richtung des Hochdruckbereichs geführt wird (Turbokompressor bzw. Turbopumpe). Dabei kann Strömungs- und/oder Druckenergie des Prozessfluids in Drehenergie des Rotors umgesetzt werden und umgekehrt. Insbesondere eignet sich die vorliegende Erfindung für eine als Turbine bzw. Turbo-Expander ausgebildete Turbomaschine mit einem sogenannten VorLeitapparat oder für einen Turbokompressor mit einem Nach-Leitapparat bzw. Nachleitgitter.

Die Betriebsbedingungen einer solchen Turbomaschine sind in der Regel nicht statisch. Vielmehr variieren im Betrieb oftmals die Drehzahl des Rotors, das von der oder an die Turbomaschine übertragene Drehmoment, die Durchflussmenge und/oder der Betriebsdruck des Prozessmediums. Um in allen Betriebszuständen einen möglichst guten Wirkungsgrad erzielen zu können, ist eine Anpassung des Leitapparats erforderlich.

Die vorliegende Erfindung geht dabei von einer Turbomaschine aus, bei der die Strömungseigenschaften im Hochdruckbereich modifiziert werden können. Hierbei wird in dem Hochdruckbereich zwischen dem ersten Klemmring und dem zweiten Klemmring ein Spalt gebildet, durch welchen im Betrieb das Prozessfluid das Turbolaufrad anströmen bzw. von diesem wegströmen kann. In dem Spalt sind verstellbare Leitelemente angeordnet, durch welche zumindest der freie Strömungsquerschnitt des Spalts variiert werden kann. Hierdurch lässt sich sowohl der Wirkungsgrad der Turbomaschine optimieren als auch im Betrieb eine Laststeuerung vornehmen.

Damit die Leitelemente ihre Steuerungsfunktion erfüllen können, müssen diese zwischen dem ersten Klemmring und dem zweiten Klemmring beweglich gelagert sein. Hierzu sind gewisse Toleranzen erforderlich. Diese Toleranzen führen jedoch im Betrieb zu Nebenströmen des Prozessfluids, welche durch Spalte zwischen den Klemmringen und den Leitelementen hindurchtreten können. Diese Fehlströme setzen sowohl die Steuerungsfähigkeit als auch den maximal erzielbaren Wirkungsgrad der Turbomaschine herab.

Um diese Toleranzen im Betrieb zu minimieren, ist es aus dem Stand der Technik bekannt, die beiden Klemmringe in Axialrichtung gegeneinander zu verspannen. Hierdurch können die Spalte zwischen den Klemmringen und den dazwischen gelagerten Leitelementen zumindest reduziert oder ganz geschlossen werden.

Beispielsweise ist es aus DE 10 2020 134 759 A1 bekannt, einen Teil des einlassseitigen Prozessfluids in eine Kammer zu leiten, welche in Axialrichtung an die den Leitelementen abgewandte Seite eines Düsenrings anschließt. In dieser Kammer bildet sich infolgedessen ein der Zuleitung entsprechender statischer Druck aus, welcher gegenüber dem Druck im Düsenspalt zwischen den Düsenringen aufgrund des Bernoulli-Effektes erhöht ist. Dieser Druckunterschied presst im Betrieb die beiden Düsenringe gegeneinander und reduziert so die Fehlströme.

Es hat sich jedoch gezeigt, dass diese Konstruktion nicht für alle Anwendungsszenarien geeignet ist. Bei besonders hohen Drücken in dem Hochdruckbereich - insbesondere oberhalb von 80 bar - wird die dadurch induzierte Anpresskraft so groß, dass sich die Leitelemente nur noch mit einem großen Kraftaufwand und unter erheblichem Verschleiß verstellen lassen. Dies reduziert nicht nur die erreichbare Lebensdauer der Turbomaschine, sondern erschwert auch eine schnelle und ständige Nachregelung zur Gewährleistung des bestmöglichen Wirkungsgrads.

Der Erfindung liegt daher die Aufgabe zugrunde, sowohl den Wirkungsgrad als auch die Standzeiten einer gattungsgemäßen Turbomaschine weiter zu verbessern. Insbesondere soll sowohl das Auftreten von Fehlströmen als auch ein erhöhter Verschleiß - insbesondere bei besonders hohen Betriebsdrücken - vermieden werden.

Gegenstand der Erfindung und Lösung dieser Aufgabe ist eine Turbomaschine nach Anspruch 1 sowie ein Verfahren zum Betrieb derselben nach Anspruch 12. Bevorzugte Ausgestaltungen sind in den abhängigen Unteransprüchen angegeben.

Ausgehend von der gattungsgemäßen Turbomaschine ist erfindungsgemäß eine variable Spannvorrichtung vorgesehen, welche dazu eingerichtet ist, in einer ersten Funktionsstellung den ersten Klemmring und den zweiten Klemmring in der Axialrichtung gegeneinander zu verspannen und in einer zweiten Funktionsstellung den ersten Klemmring und den zweiten Klemmring in der Axialrichtung zu entlasten. Durch die variable Spannvorrichtung kann der Anpressdruck, mit dem die Klemmringe und die dazwischen angeordneten Leitelemente aneinandergepresst werden, im Betrieb verändert werden. Dadurch ist es einerseits möglich - in der ersten Funktionsstellung - die Spalte zwischen den Klemmringen und den Leitelementen zu minimieren und so Fehlströme des Prozessfluids zu verhindern. Andererseits kann der Leitapparat - in der zweiten Funktionsstellung - entlastet werden, sodass sich die verstellbaren Leitelemente schnell, präzise, leichtgängig und verschleißarm bewegen lassen. Somit ermöglicht die Erfindung die Vorteile beider Systeme miteinander zu verbinden.

Gemäß der vorliegenden Anmeldung ist unter dem "Verspannen" insbesondere zu verstehen, dass die variable Spannvorrichtung auf zumindest einen Klemmring eine parallel zu der Axialrichtung in Richtung des jeweils anderen Klemmrings wirksame Kraft ausübt. Der Betrag der ausgeübten Kräfte ist dabei groß genug, dass beide Klemmringe spielfrei, d. h. ohne einen dazwischen ausgebildeten Spalt, an den verstellbaren Leitelementen anliegen.

Im Rahmen der Erfindung ist unter "Entlasten" insbesondere zu verstehen, dass diese axial wirksame Anpresskraft in der zweiten Funktionsstellung gegenüber der ersten Funktionsstellung reduziert wird. Hierdurch wird der Druck im Kontaktbereich zwischen den Leitelementen und den Klemmringen reduziert bzw. ein Flächenkontakt beendet. Dadurch reduziert sich bei einer Verstellung der Leitelemente die Reibung. Besonders bevorzugt ist die Spannvorrichtung in der zweiten Funktionsstellung deaktiviert, sodass diese keine axial wirksamen Anpresskräfte ausübt.

Gemäß einer bevorzugten Ausgestaltung der Erfindung ist der erste Klemmring in der Axialrichtung verschieblich an dem Gehäuse gelagert. Dadurch kann dieser von der Spannvorrichtung besonders einfach bei einem Verspannen in Richtung der Leitelemente und des zweiten Klemmrings bewegt werden, um etwaige Fehlluftspalte zu schließen. Ebenso ermöglicht die axiale Verschiebbarkeit ein Beabstanden des ersten Klemmrings von den Leitelementen und dem zweiten Klemmring, um den Vorleitapparat zu entlasten.

Der zweite Klemmring ist bevorzugt ortsfest an dem Gehäuse oder als Bestandteil des Gehäuses ausgebildet. Die axiale Verlagerung - relativ zu dem Gehäuse - beim Verspannen und Entlasten wird damit auf den ersten Klemmring konzentriert. Dies erleichtert die sichere und bezüglich des Laufrads lagerichtige Positionierung des Düsenspalts zwischen den beiden Klemmringen, insbes. in einer Flucht mit dem Einlass bzw. Auslass an der Hochdruckseite des Turbolaufrads. Bei einem fliegend an einem ersten Ende des Rotors angeordneten Turbolaufrad ist vorzugsweise derjenige Klemmring bezüglich des Gehäuses feststehend ausgebildet, welcher dem gegenüberliegenden zweiten Ende des Rotors näher ist.

Gemäß einer besonders bevorzugten Ausgestaltung sind die Leitelemente als Leitbleche oder Leitschaufeln ausgebildet, welche jeweils um eine parallel zu der Drehachse verlaufende Verstellachse beweglich gelagert sind. Durch die achsparallele Verdrehung der Leitelemente lässt sich der freie Gesamtströmungsquerschnitt des Düsenspalts und die Ausrichtung der in Umfangsrichtung zwischen jeweils zwei benachbarten Leitelementen ausgebildeten Spalte variieren. Hierdurch kann bei einem Expander das einströmende Prozessfluid in einem variablen Richtungsvektor - mit Komponenten radial und tangential bezüglich der Drehbewegung des Rotors - dem Turbolaufrad zugeleitet bzw. bei einem Kompressor von dem Turbolaufrad übernommen werden.

Besonders bevorzugt sind die Leitelemente in Umfangsrichtung gleichmäßig zwischen dem ersten Klemmring und dem zweiten Klemmring verteilt. Ganz besonders bevorzugt sind die Leitelemente gleichlaufend mit einem gemeinsamen Antriebselement gekoppelt. Hierbei kann es sich z. B. um einen Zahnring handeln, welcher mit jeweils an die Leitelemente gekoppelten Stellritzeln kämmt.

Die Erfindung ist gleichermaßen bei Turbokompressoren wie auch bei Turboexpandern umsetzbar.

Vorzugsweise ist die Turbomaschine in radialer Bauart ausgebildet. Das bedeutet, dass das Turbolaufrad bei einem Expander als Radial-Turbinenlaufrad mit einem radial außenseitig angeordneten Einlass und einem radial innenseitig angeordneten Auslass ausgebildet ist. Insbesondere strömt das Prozessfluid durch einen axial ausgerichteten Auslass in Richtung des Niederdruckbereichs ab. Als "radial" ist dabei die von der Drehachse weg gerichtete Richtung zu verstehen.

Alternativ kann die Turbomaschine als Turbokompressor, insbes. radialer Bauart, ausgeführt sein. Dabei ist das Turbolaufrad als Radial-Kompressorlaufrad mit einem radial innenseitig angeordneten Einlass und einem radial außenseitig angeordneten Auslass ausgebildet ist. Insbesondere strömt das Prozessfluid einen axial ausgerichteten Einlass des Turbolaufrads aus Richtung des Niederdruckbereichs an.

Gemäß einer besonders bevorzugten Ausgestaltung weist die Spannvorrichtung eine Druckkammer auf, welche gegenüber dem Hochdruckbereich abgetrennt und/oder abgedichtet ist. Die Druckkammer ist dabei derart ausgestaltet, dass eine Druckdifferenz zwischen der Druckkammer und dem Düsenspalt ein axiales (in der Axialrichtung ausgerichtetes) Kraftmoment auf zumindest einen der Klemmringe ausübt. Durch die räumliche Abtrennung und/oder Abdichtung gegenüber dem Hochdruckbereich werden diese bezüglich des Druckniveaus voneinander entkoppelt. Dadurch ist eine präzise Steuerung des Innendrucks innerhalb der Druckkammer - und damit des Anpressdrucks der Klemmringe - möglich. Durch ein Steigern des Innendrucks innerhalb der Druckkammer kann die erste Funktionsstellung und durch ein Absenken die zweite Funktionsstellung erreicht werden.

Vorzugsweise ist vorgesehen, dass die Druckkammer mit einer ein Ventil, insbesondere ein Dreiwegeventil, aufweisenden Zuflussleitung mit einer Druckquelle verbindbar ist. Durch entsprechende Ansteuerung des Ventils - d. h. im durchleitenden Zustand zwischen der Druckquelle und der Druckkammer - kann der Innendruck innerhalb der Druckkammer gesteigert werden, um die erste Funktionsstellung zu erreichen.

Besonders bevorzugt ist das Ventil in eine Entlastungsposition verstellbar, in der die Zuflussleitung die Druckkammer mit einer Drucksenke - insbesondere dem Niederdruckbereich, einem Innenraum des Gehäuses und/oder der das Gehäuse umgebenden Umgebung verbindbar ist. Drucksenke bedeutet in diesem Fall ein Raum, in dem ein niedrigeres Druckniveau als im Hochdruckbereich herrscht.

Gemäß einer Ausführungsform ist die Zuflussleitung als Druckquelle mit dem Hochdruckbereich oder einer an den Hochdruckbereich (vorzugsweise direkt) angeschlossenen Zuleitung verbunden. Damit kann das ohnehin auf der Hochdruckseite herrschende erhöhte Druckniveau genutzt werden, um die Druckkammer mit einem Betriebsdruck zu versorgen, welche in der ersten Funktionsstellung das erfindungsgemäße Verspannen ermöglicht. Dabei meint "verbunden" eine direkte Verbindung, bei der die Zuflussleitung unmittelbar in einer Wandung des Hochdruckbereichs bzw. der Zuleitung - beispielsweise einer Rohrleitung - mündet.

Alternativ oder zusätzlich können die Zuflussleitung und/oder die Druckquelle einen Kompressor beinhalten. Dieser Kompressor dient der Überhöhung des Drucks eines in die Druckkammer eingeleiteten Fluids (Steuerfluid). Bei diesem Steuerfluid kann es sich um das Prozessfluid handeln, welches durch die Turbostufe hindurchgeleitet wird. Ebenso ist auch der Einsatz von Umgebungsluft oder einem anderen Prozessgas, insbesondere einem Inertgas denkbar.

Der Kompressor ist insbesondere als Hilfskompressor zu verstehen, welcher ausschließlich für die Kompression des Steuerfluids vorgesehen ist. Die im Betrieb vorgesehene Durchflussmenge des Hilfskompressors ist gegenüber der Turbostufe zumindest um einen Faktor 10, insbesondere zumindest um einen Faktor 100 kleiner. Der Hilfskompressor kann insbesondere mit dem Rotor der Turbomaschine mechanisch gekoppelt sein.

Gemäß einer bevorzugten Gestaltung liegt in dem Hochdruckbereich ein Betriebsdruck von zumindest 80 bar, insbesondere zumindest 150 bar an. Bevorzugt wird die Turbomaschine mit einem Betriebsdruck zwischen 80 bar und 300 bar, insbesondere zwischen 180 bar und 230 bar in dem Hochdruckbereich betrieben. In diesem Druckbereich kommen die erfindungsgemäßen Vorteile besonders gut zum Tragen, da bei diesen Drücken die Vermeidung von Fehlströmen an den Leitelementen vorbei dringend vermieden werden muss und andererseits eine dauerhafte Verspannung der Klemmringe beim Verstellen zu einem nicht hinnehmbaren Verschleiß führt.

Gegenstand der Erfindung ist auch ein Verfahren zum Betrieb einer zuvor beschriebenen Turbomaschine. Erfindungsgemäß werden im Betrieb die Leitelemente verstellt. Dabei wird zunächst das Spannmittel entlastet - d. h. die Turbomaschine wird in den zweiten Funktionszustand gebracht - wonach eine Verstellung der Leitelemente erfolgt und anschließend das Spannmittel wieder belastet wird - in den ersten Funktionszustand überführt wird. Damit können die Vorteile einer Verspannung in dem ersten Funktionszustand mit einer besonders geringen Fehlstrommenge und einem hohen Wirkungsgrad realisiert werden, während der Verschleiß durch Überführen in den zweiten Funktionszustand beim Verstellen reduziert wird.

Beim Übergang aus dem ersten Funktionszustand in den zweiten Funktionszustand kann insbesondere vorgesehen sein, dass die zur Verspannung wirksame axiale Kraft - d.h. insbesondere der Innendruck in einer Druckkammer - so lange reduziert wird, bis die axiale Kraft und/oder die zum Bewegen der Leitelemente erforderliche Kraft bzw. das erforderliche Drehmoment unter einen vordefinierten Wert absinkt. Insbesondere wird die axiale Kraft bzw. der Innendruck danach während der Verstellung konstant gehalten.

Im Rahmen der Erfindung bevorzugt ist vorgesehen, dass eine Verstellung der Leitelemente ausschließlich in dem zweiten Funktionszustand erfolgt. Insbesondere wird die Ansteuerung der Leitelemente im ersten Funktionszustand (insbesondere sensorgestützt) unterbunden. Dieser Sensor kann insbesondere als Kraftmesseinrichtung, welche die auf die Klemmringe wirkenden axialen Kräfte aufnimmt, oder auch als Druckmesseinrichtung verbunden mit einer Druckkammer ausgebildet sein.

Vorzugsweise ist das erfindungsgemäße Verfahren anwendbar, wenn in dem Hochdruckbereich ein Prozessdruck von zumindest 80 bar, vorzugsweise zumindest 150 bar, insbesondere zwischen 180 bar und 300 bar vorliegt.

Gemäß einer besonders bevorzugten Ausgestaltung des erfindungsgemäßen Verfahrens handelt es sich bei dem durch die Turbostufe geführten Prozessfluid um superkritisches Kohlenstoffdioxid (SCO₂). Dieses wird auch als Prozessmedium in thermodynamischen Kreisprozessen eingesetzt, welche besonders bevorzugt auf den Wirkungsgrad optimiert werden. Ganz besonders bevorzugt wird das erfindungsgemäße Verfahren im Rahmen eines thermodynamischen Kreisprozesses zur Wärmerückgewinnung verwendet.

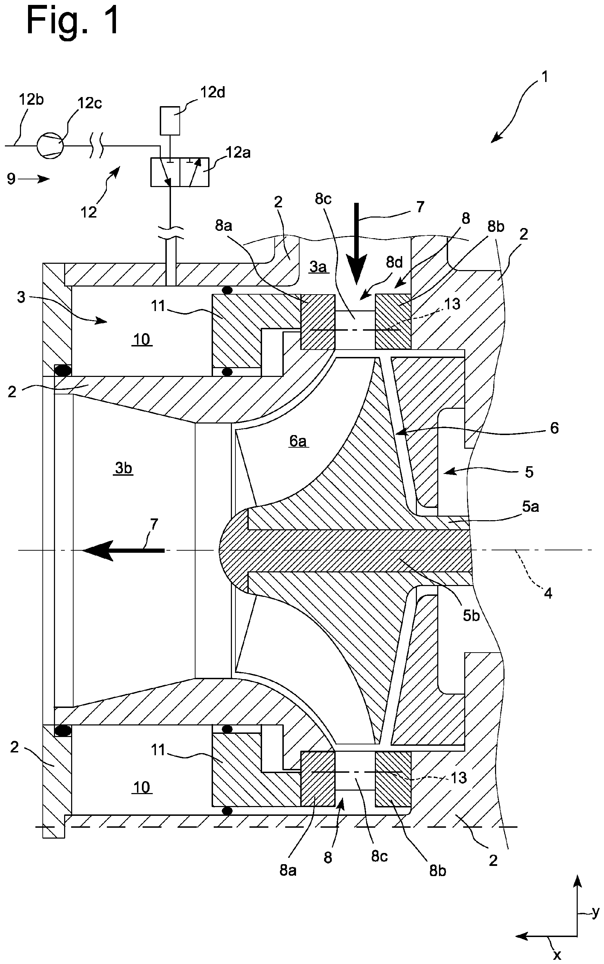

Die Erfindung wird anhand einer lediglich ein Ausführungsbeispiel darstellenden Zeichnung erläutert. Diese zeigt schematisch
- Fig. 1: eine Schnittdarstellung einer erfindungsgemäßen Turbomaschine.

Die Fig. 1 zeigt eine Turbomaschine 1 mit einem mehrteiligen Gehäuse 2, welches eine einen Hochdruckbereich 3a und einen Niederdruckbereich 3b auf weisende Laufradkammer 3 umfasst. Die Turbomaschine 1 weist ferner einen an dem Gehäuse 2 um eine in einer Axialrichtung x verlaufende Drehachse 4 drehbar gelagerten Rotor 5, welcher zumindest ein in der Laufradkammer 3 angeordnetes Turbolaufrad 6 aufweist.

Das Turbolaufrad 6 ist in radialer Bauart ausgebildet und wird im Betrieb vom Hochdruckbereich 3a her ausgehend in radialer Richtung angeströmt. Das Prozessfluid 7 kann dabei in der Radialrichtung, welche in der Schnittdarstellung mit einer zu der Axialrichtung x senkrecht stehenden zweiten Richtung y zusammenfällt, in einen Strömungskanal 6a des Turbolaufrades 6 eintreten und diesen in axialer Richtung x wieder verlassen. Der Rotor 5 ist in der gezeigten Darstellung des Turbolaufrades 6 nur angedeutet. So schließt an das Turbolaufrad 6 materialeinheitlich ein Wellenfortsatz 5a an, welcher mit dem Rest des Rotors über eine Hirth-Verzahnung gekoppelt ist. Das Turbolaufrad 6 kann dabei über einen Spannbolzen 5b mit dem übrigen Rotor verspannt werden, welcher koaxial um die Drehachse 4 ausgebildet ist.

In dem Hochdruckbereich 3a ist eine Leitapparat 8 mit einem ersten Klemmring 8a, einem zweiten Klemmring 8b und in der Axialrichtung x zwischen dem ersten Klemmring 8a und dem zweiten Klemmring 8b angeordneten verstellbaren Leitelementen 8c angeordnet. Der erste Klemmring 8a und der zweite Klemmring 8b sind rotationsperiodisch um die Drehachse 4 als Kreisring ausgebildet. In der dargestellten Schnittebene sind zwei der verstellbaren Leitelemente 8c sichtbar. Die Leitapparat 8 wird im Allgemeinen auch als Vorleitapparat bezeichnet.

Bei der dargestellten Turbomaschine 1 handelt es sich um eine Turbine bzw. einen Turbo-Expander, bei der der Hochdruckbereich 3a einen außenliegenden Einlassbereich und der Niederdruckbereich 3b einen radial innenliegenden Auslassbereich bildet. Durch eine Umkehr der Strömungsrichtung kann die Figur auch als schematische Darstellung eines Turbokompressors aufgefasst werden. Der Leitapparat 8 würde dann ein sog. Nachleitgitter bilden.

Erfindungsgemäß ist eine variable Spannvorrichtung 9 vorgesehen, welche dazu eingerichtet ist, in einer ersten Funktionsstellung den ersten Klemmring 8a und den zweiten Klemmring 8b in der Axialrichtung x gegeneinander zu verspannen. In einer zweiten Funktionsstellung ist die Spannvorrichtung 9 dazu eingerichtet, den ersten Klemmring 8a und den zweiten Klemmring 8b in der Axialrichtung x zu entlasten. Hierzu ist der erste Klemmring 8a in der Axialrichtung x verschieblich an dem Gehäuse 2 gelagert, während der zweite Klemmring 8b unmittelbar an einer Wandlung des Gehäuses 2 anliegt und damit in der Axialrichtung x unverschieblich ist.

Die variable Spannvorrichtung 9 umfasst eine Druckkammer 10, welche gegenüber dem Hochdruckbereich 3a (und auch gegenüber dem Niederdruckbereich 3b abgetrennt und abgedichtet ist. Die Druckkammer 10 ist über einen Stempel 11 mit dem ersten Klemmring 8a derart gekoppelt, dass ein statischer und/oder dynamischer Überdruck der Druckkammer 10 im Verhältnis zu dem zwischen dem ersten Klemmring 8a und dem zweiten Klemmring 8c ausgebildeten Düsenspalt 8d ein in der Axialrichtung x ausgerichtetes Kraftmoment ausübt. Durch das Anlegen eines solchen Überdrucks kann die erste Funktionsstellung der Turbomaschine erreicht werden, während durch eine Reduzierung des Überdrucks, insbesondere eine Angleichung der Druckverhältnisse oder das Anlegen einer negativen Druckdifferenz eine axiale Entlastung und damit die zweite Funktionsstellung erreicht werden kann.

In dem dargestellten Ausführungsbeispiel umfasst die variable Spannvorrichtung 9 ferner eine Zuflussleitung 12, durch welche die Druckkammer 10 über ein Dreiwegeventil 12a mit einer Druckquelle verbindbar ist. Die Druckquelle umfasst eine Zapfleitung 12b, welche - nicht dargestellt - in eine Leitung mündet, welche an den Hochdruckbereich 3a angeschlossen ist. Ferner ist im Rahmen der Druckquelle ein Hilfskompressor 12c vorgesehen, welcher gegenüber dem Druckniveau des Hochdruckbereichs 3a eine Drucküberhöhung vornimmt. In der dargestellten Schaltstellung des Dreiwegeventils 12a ist die Druckkammer 10 mit der Druckquelle 12b, 12c verbunden, sodass sich dort ein Überdruck - und infolgedessen die erste Funktionsstellung - einstellt.

In einer alternativen - nicht geschalteten - Konfiguration des Dreiwegeventils 12b kann die Druckkammer mit einer lediglich schematisch angedeuteten Drucksenke 12d verbunden werden. Hierbei kann es sich insbesondere um den Niederdruckbereich 3b handeln, sodass in der zweiten Schaltstellung ein Unterdruck in der Druckkammer 10 im Verhältnis zum Hochdruckbereich 3a bzw. zum Düsenspalt 8d vorliegt und die zweite Funktionsstellung eingenommen wird. Infolgedessen handelt es sich bei dem in die Druckkammer 10 eingeleiteten Fluid - dem Steuerfluid - um das Prozessfluid 7.

In der Fig. 1 ist lediglich angedeutet, dass die Leitelemente 8c als Leitschaufeln ausgebildet sind, welche jeweils um in der Axialrichtung x verlaufende Stellachsen 13 drehbar gehalten sind. Durch ein Verspannen des ersten Klemmrings 8a und des zweiten Klemmrings 8b kann diese Drehbeweglichkeit unterbunden und gleichzeitig etwaige Fehlstromspalte zwischen den Leitelementen 8c einerseits und den Klemmringen 8a, 8b andererseits geschlossen werden.

## Patentansprüche

1. Turbomaschine (1) mit einem Gehäuse (2), welches eine einen Hochdruckbereich (3a) und einen Niederdruckbereich (3b) aufweisende Laufradkammer (3) umfasst, und mit einem an dem Gehäuse (2) um eine in einer Axialrichtung (x) verlaufende Drehachse (4) drehbar gelagerten Rotor (5), welcher zumindest ein in der Laufradkammer (3) angeordnetes Turbolaufrad (6) aufweist, wobei in dem Hochdruckbereich (3a) ein Leitapparat (8) mit einem ersten Klemmring (8a), einem zweiten Klemmring (8b) und in der Axialrichtung (x) zwischen dem ersten Klemmring (8a) und dem zweiten Klemmring (8b) positionierten verstellbaren Leitelementen (8c) angeordnet ist, **gekennzeichnet durch** eine variable Spannvorrichtung welche dazu eingerichtet ist in einer ersten Funktionsstellung den ersten Klemmring (8a) und den zweiten Klemmring (8b) in der Axialrichtung (x) gegeneinander zu verspannen und in einer zweiten Funktionsstellung den ersten Klemmring (8a) und den zweiten Klemmring (8b) in der Axialrichtung (x) zu entlasten.

2. Turbomaschine (1) nach Anspruch 1, **dadurch gekennzeichnet, dass** der erste Klemmring (8a) in der Axialrichtung (x) verschieblich an dem Gehäuse (2) gelagert ist.

3. Turbomaschine (1) nach Anspruch 1 oder 2, **dadurch gekennzeichnet, dass** der zweite Klemmring (8b) ortsfest an dem Gehäuse (2) gelagert oder als Bestandteil des Gehäuses (2) ausgebildet ist.

4. Turbomaschine (1) nach einem der Ansprüche 1 bis 3, **dadurch gekennzeichnet, dass** die Leitelemente (8c) als Leitbleche ausgebildet sind, welche jeweils drehbar um eine parallel zu der Drehachse (4) verlaufende Stellachse (13) gelagert sind.

5. Turbomaschine (1) nach einem der Ansprüche 1 bis 4, **dadurch gekennzeichnet, dass** das Turbolaufrad (6) als Radial-Turbinenlaufrad mit einem radial außenseitig angeordneten Einlass und einem radial innenseitig angeordneten Auslass ausgebildet ist.

6. Turbomaschine (1) nach einem der Ansprüche 1 bis 4, **dadurch gekennzeichnet, dass** das Turbolaufrad als Radial-Kompressorlaufrad mit einem radial innenseitig angeordneten Einlass und einem radial außenseitig angeordneten Auslass ausgebildet ist.

7. Turbomaschine (1) nach einem der Ansprüche 1 bis 6, **dadurch gekennzeichnet, dass** die Spannvorrichtung eine Druckkammer (10) aufweist, welche gegenüber dem Hochdruckbereich (3a) abgetrennt und/oder abgedichtet ist.

8. Turbomaschine (1) nach Anspruch 7, **dadurch gekennzeichnet, dass** die Druckkammer (10) mit einer ein Ventil, insbesondere ein Dreiwegeventil (12a), aufweisenden Zuflussleitung (12) mit einer Druckquelle verbindbar ist.

9. Turbomaschine (1) nach Anspruch 8, **dadurch gekennzeichnet, dass** die Zuflussleitung als Druckquelle mit dem Hochdruckbereich (3a) oder einer an den Hochdruckbereich (3a) angeschlossenen Zuleitung verbunden ist.

10. Turbomaschine (1) nach Anspruch 8 oder 9, **dadurch gekennzeichnet, dass** die Zuflussleitung (12) und/oder die Druckquelle einen Kompressor (12c) beinhaltet.

11. Turbomaschine (1) nach einem der Ansprüche 1 bis 10, **dadurch gekennzeichnet, dass** in dem Hochdruckbereich (3a) ein Betriebsdruck von zumindest 80 bar, insbesondere zumindest 150 bar anliegt.

12. Verfahren zum Betrieb einer Turbomaschine (1) nach einem der Ansprüche 1 bis 11, **dadurch gekennzeichnet, dass** im Betrieb die Leitelemente (8c) verstellt werden, wobei zunächst das Spannmittel entlastet wird, danach eine Verstellung der Leitelemente (8c) erfolgt und anschließend das Spannmittel wieder belastet wird.
